# EUROPEAN PATENT APPLICATION

(11) **EP 4 782 294 A1**
(43) Date of publication of application: **29.07.2026**
(21) Application number: 25153267.7
(22) Date of filing: 22.01.2025
(51) Int. Cl.: B60W 30/12, B60W 30/18, B60W 40/08, B60W 50/00, B60W 50/10

(54) **METHOD FOR ASSESSING A DRIVER INTENTION OF A VEHICLE DRIVER, METHOD FOR ASSISTING A DRIVING MANEUVER, AS WELL AS ASSISTANCE SYSTEM**

(71) Applicant: Valeo Comfort and Driving Assistance, 94000 Créteil (FR)
(72) Inventor: Martins, Léonie, 94000 Creteil (FR); Rached, Louis, 94000 Creteil (FR); Bunouf, Elise, 94000 Creteil (FR); Nguyen, Kevin, 94000 Creteil (FR)
(74) Representative: Jauregui Urbahn, Kristian

(57) **Abstract**

The invention relates to a method, in particular a computer-implemented method, for assessing a driver intention of a driver (11) of a vehicle (1), comprising the following steps:
a) providing vehicle parameter to a computing unit (5);
b) providing parameter as to the vehicle driver (11) to the computing unit (5);
c) assigning at least one first characterizing value (α) to at least one vehicle parameter;
d) assigning at least one second characterizing value (α) to at least one vehicle driver parameter;
e) assigning at least one first weighting factor (k) for at least one vehicle parameter, by which the first characterizing value (α) of the vehicle parameter is weighted;
f) assigning at least one second weighting factor (k) for at least one vehicle driver parameter, by which the second characterizing value (α) of the vehicle driver parameter is weighted;
g) assessing the driver intention by the computing unit (5) depending on the first and second characterizing values (α) and the first and second weighting factors (k).

## Description

One aspect of the invention relates to a method for assessing a driver's intention of a driver of a vehicle. A further aspect of the invention relates to a method for assisting an at least semi-manual driving maneuver of a vehicle. A further aspect of the invention relates to an electronic assistance system for a vehicle.

In modern vehicles manifold assistance systems are present.

For example here a lane keeping assistance system or a lane centering assistance system is known. In these assistance systems it is also known that a vehicle driver guides the vehicle semi-manually and is assisted by the named assistance systems.

If now a vehicle driver conducts a driving maneuver, which for example is a lane change, and in doing so does not activate a direction indicator of the vehicle, in an above-named activated assistance system a feedback or a warning is generated. For instance this may be a haptic feedback via a steering element of a steering unit of the vehicle. For example, for this purpose a steering wheel may vibrate. Also other possibilities are known, which in such a driving maneuver provide signaling feedback to the vehicle driver.

In this connection it is also known that such feedbacks or warnings generated by the system are not generated, when the vehicle driver actively actuates the direction indicator in such a driving maneuver. The assistance system then activated in this regard then knows that the vehicle driver deliberately no longer wishes to keep the vehicle centrally in the lane or wishes to perform a lane change, respectively.

From the US 2024 166 200 A1 a method and a system is known, in which it is attempted to recognize an intention of a vehicle driver and depending thereon the operating mode of the assistance system is adapted.

It is an objective of the present invention to provide a method as well as an assistance system, in which the semi-manual guiding of a vehicle, which is assisted by an assistance system, is improved.

In particular, it is an objective of the present invention to provide a method, in which the recognition of a wish of the vehicle driver and thus a driver intention is recognized more accurately.

The objective is solved by a method and an assistance system according to the independent claims.

One aspect of the invention relates to a method for assessing a driver's intention of a vehicle driver of a vehicle. The method preferably comprises the following steps:
a) providing vehicle parameter to a computing unit;
b) providing parameter as to the vehicle driver to the computing unit;
c) assigning at least one first characterizing value to at least one vehicle parameter;
d) assigning at least one second characterizing value to at least one vehicle driver parameter;
e) assigning at least one first weighting factor for at least one vehicle parameter, by which the first characterizing value of the vehicle parameter is weighted;
f) assigning at least one second weighting factor for at least one vehicle driver parameter, by which the second characterizing value of the vehicle driver parameter is weighted;
g) assessing the driver intention by the computing unit depending on the first and second characterizing values and the first and second weighting factors.

The method is in particular a computer-implemented method. Steps of the method, in particular all steps a) to g), are then executed by a computing unit.

By the method it is possible to be able to analyze the intention of the vehicle driver more precisely. Thus a more significant base information is created in order to recognize depending thereon if in the case of an activated assistance system the vehicle driver deliberately performs driving maneuvers, which lead to warnings or feedbacks of the assistance system, respectively, or whether this occurs unintentionally and these feedbacks and warnings are required to be able to avoid safety-critical traffic situations.

Thus, in a particularly advantageous way it is facilitated to better coordinate semi-manual driving maneuvers, which are assisted by an assistance system of the vehicle. Vehicle information may also be vehicle parameter; vehicle driver information may also be vehicle driver parameter.

Particularly advantageous in connection with the method is the fact that this more precise analysis of the driver intention on the basis of both vehicle information or parameter as well as vehicle driver information or parameter is evaluated. Particularly advantageous is the fact that in this connection both characterizing values as well as weighting factors are determined. This analysis of the driver intention specified by the method therefore is based on a very specific information basis, which then completes the assessment by a very specific evaluation approach with the named characterization values and the weighting factors. In this connection, namely precisely when several pieces of vehicle information and/or several pieces of vehicle driver information are used, these are not generally used as a base, but rather are in particular supplied with the characterizing values and the weighting factors or characterized by them. Thus, a particularly precise analysis of the incorporated information, in particular also with regard to its meaning, may be represented in an improved way by the analysis and/or with regard to its meaning in comparison with one another. A more detailed and more situation-specific assessment of the driver's intention is thereby achieved.

In an embodiment, when assessing, an assessment value is generated by the computing unit depending on the characterizing values and the weighting factors. This means it is facilitated by the analysis method to determine or to compute, respectively, a single assessment value, which then characterizes the assessment of the driver intention, depending on several characterization values and several weighting factors. Thus, in an advantageous embodiment a single assessment value, into which these characterizing values and the weighting factors are incorporated, reflects the assessment result. Thus, by one value also a very simple follow-up decision can be made as to which extent the driver's intention has been sufficiently recognized or in this regard precisely not been recognized or been recognized only to a certain degree of probability.

In an embodiment, a product value for a vehicle information or parameter is generated by the computing unit from the characterizing value and the weighting factor. Thus, it is envisaged in this advantageous embodiment that vehicle information is determined as a specific function of the characterizing value and the weighting factor. This function is a product from these two named basic quantities, namely the characterizing value and the weighting factor. On the one hand, therefore both named quantities, namely the characterizing value and the weighting factor, are incorporated into the assessment of a vehicle information, and precisely by a product, that is a multiplication, the weighting may be represented in a particularly advantageous and detailed way. On the other hand, precisely such a product value from these two quantities is particularly easy to determine. Therefore, also the computing effort and thus the analysis requirement is reduced and still a highly accurate statement is made possible.

In an embodiment, a product value for a vehicle driver information or parameter is generated by the computing unit from the characterizing value and the weighting factor. Here the advantages apply as they were named for the above-named embodiment with regard to the vehicle information apply accordingly.

In an embodiment the product value, which, on the one hand, characterize a vehicle information, and, on the other hand, characterize a vehicle driver information, are summed. By the sum the assessment value is formed. Thereby it is achieved in an advantageous embodiment that all these product values are considered for the assessment value. The summing here allows for a simple procedure to form the assessment value, here to be obtained in a cumulative way from the basic values. A formation of a sum in this connection also represents a simple method of considering the product values again, whereby the computing effort is reduced and, on the other hand, still all product values are considered. Also thereby the accuracy of the assessment is high.

In an embodiment, the characterizing values of the vehicle information are determined depending on the number of pieces of vehicle information and/or the kind of vehicle information and/or depending on the order in which the vehicle information is captured, and/or depending on a priority list of the vehicle information. Such influential quantities, which may represent the determining of the characterization values, produce a very exact image of the current and/or situation to be expected in the future. Thus, a characterizing value for at least one vehicle information can be determined in a very varied and multifaceted way. The consideration of the merely exemplarily named influential quantities also allows for a determination of a characterizing value that is highly customized and situation-specific. Thereby, too, the degree of detail of the analysis is very high and thus leads to a precise assessment result.

It is also possible that a characterizing value of the vehicle information is determined depending on the current traffic situation and/or the traffic situation to be expected, in which the vehicle is. It is also possible that the characterizing values of the vehicle driver information are determined depending on the number of vehicle driver information and/or depending on the kind of vehicle driver information and/or depending on the order, in which the vehicle driver information is captured, and/or depending on a priority list of the vehicle driver information. Here, too, additionally or instead, the current traffic situation and/or the traffic situation to be expected for the determining of a characterizing value of a vehicle driver information may be considered.

It is also possible that the weighting factors of the vehicle information and/or the weighting factors of the vehicle driver information are determined depending on the importance of the respective information taken as a basis, namely the vehicle information, on the one hand, and the vehicle driver information, on the other hand.

It is also possible that the weighting factors are determined with regard to the other vehicle information or the traffic situation et cetera or depending on the vehicle driver information and/or the traffic situation.

Here, too, the named examples that may be the influential quantities for the determination of a weighting factor, are to be understood as merely exemplary and not concluding. Also other influential quantities may be considered in order to determine weighting factors and/or the characterizing values.

In an embodiment, a characterizing value may reach a value between 0 and 1. It is also possible that a weighting factor has a value between 0 and 1. However, it is also possible that a weighting factor has a value of > 1.

In an embodiment it is envisaged that the assessment value comprises a quotient, which has as dividends the sum of the product values, as they were named above. In the divisor this quotient has the sum of the weighting factors. By such procedure the assessment value is even more accurate, in particular standardized.

In an embodiment, it is envisaged that the assessment value forms a value viewed in the temporal course. This means in particular that this above-named quotient is viewed for a time window. In this connection it is possible that the above-named steps a) to g) are repeated at least once. Thus, corresponding information and/or characterizing values and/or weighting factors are given at least two different, in particular discrete points in time. In particular then the driver's intention is assessed depending on the temporal course of the assessment result. In particular therein a temporal course of the assessment value is taken as a base.

It is also possible that at several points in time corresponding information is provided and/or characterizing values are determined and/or at several points in time weighting factors are determined.

It is also possible that here quasi a continuous or nearly continuous consideration of the named information and the temporal course and/or the continuous determination of the temporal course of a characterizing value and/or the continuous determination of a temporal course of a weighting factor is performed in order to then be able to determine an assessment value therefrom, in particular to be able to determine an assessment value, which also reflects a specific time window or a change of the named information and quantities over this time window.

In an embodiment vehicle information may be ones named in the following.

A current steering angle of a steering unit of the vehicle and/or a change of the steering angle of the steering unit of the vehicle. A steering unit may for example be steerable wheels of the vehicle and/or a steering element, such as for example a steering wheel. A vehicle information may for example also be the vehicle speed. A vehicle information may for example also be the vehicle speed. A vehicle information may for example also be the duration of time until a potential collision with an object in the environment of the vehicle.

Moreover, vehicle information may also be vehicle environment information. In particular vehicle environment information may be information as to a course of a road and/or as to the conditions of the road. Vehicle environment information may, however, also be information as to at least one object in the environment of the vehicle. A vehicle environment information may, however, for example also be a weather information. Vehicle environment information may for example also be a traffic density and/or a kind of the road, such as for example a motorway or a highway or a cross-country road or the like. Also the infrastructure in the environment of the vehicle may be a vehicle environment information. Moreover, a vehicle's information may also be the current level of autonomy, at which the vehicle is operated. Known in this connection are the autonomy levels L0 to L5 generally predetermined in the field of automobiles.

Vehicle information may also be specific navigation maneuvers of the vehicle. Here, for example, also determined or predetermined travel trajectories may be considered.

A vehicle environment information may also comprise a target object identification and verification. This is in particular a process, which identifies and verifies a primary target object. This target object is such an object, which is captured and monitored by an assistance system of the vehicle and/or with which it is able and meant to interact, in particular communicate. Such a target object may for example be another vehicle or a pedestrian or another object in the environment.

A vehicle information may also be a vector of the maneuvering of the vehicle. Such a vector of the maneuvering relates in particular to a sequence or a set of possible actions, which a vehicle may perform or take, respectively, in reaction to various driving scenarios. Such a vector of the maneuvering may for example be the adaptation of the speed for keeping a safe distance from other traffic participants, in particular from the preceding vehicle. Such a vector of the maneuvering may for example also comprise the adjustment of the steering unit in order to keep the vehicle in the lane. Moreover, a vector of the maneuvering may also comprise the actuation of a brake unit of the vehicle, in particular for avoiding a collision. Moreover, a vector of the maneuvering may be the initiation of a lane change in order to for example drive around an obstacle or to avoid a collision, which is located along the travel trajectory of the vehicle.

A further vehicle information may for example be vehicle communication with external units, that is a so-called V2X communication.

However, vehicle information may for example also be information from an environmental map, in particular a so-called HD (High Definition) map.

In an embodiment, vehicle driver information may for example be the viewing direction of the vehicle driver and/or the position of the head of the vehicle driver. A vehicle driver information may for example also be the grasping of a steering element of a steering unit of the vehicle by the vehicle driver. In particular, in this connection also the position, at which the vehicle driver touches, in particular grasps, the steering element with one and/or two hands, may be a vehicle driver information. In particular, the viewing direction of the vehicle driver may be determined with regard to the region of interest For example when a driver's intention is a lane change of the vehicle, such a region of interest may be in the direction in which the lane change is to take place. With regard to the viewing direction and/or the position of the head of the driver this may also be considered with regard to an observation of the dead angle. This means that in this regard a vehicle driver information is also such one whether the position of the head of the driver is directed towards the side, in particular in order to observe an exterior mirror and/or a dead angle. The vehicle driver information may be captured by a capturing unit or several capturing units. A capturing unit may for example be a camera or another sensor, as for example a touch sensor.

Thus, a vehicle driver information is also an information as to whether a vehicle driver currently observes, that is has an eye on, a mirror, in particular a side mirror and/or an interior mirror,

Generally speaking, the vehicle information and the vehicle driver information may be referred to as influential information. This influential information is provided once or several times at discrete points in time or continuously to the computing unit. A vehicle information may also relate to such one that is based on vehicle environment information and assesses the possibility of a general lane change, in particular due to the traffic situation. In particular, in this connection this may also relate to the possibility of overtaking, in particular a vehicle preceding on a current lane. In particular, the above-named influential information is also a mirror observation scenario. This means this relates to the observation of one or several mirrors of the vehicle by the vehicle driver. Also the monitoring of the dead angle in this regard, as already mentioned, is an influential information. Also the obstacle monitoring of an object or an obstacle, respectively, in the environment of the vehicle in this regard is a corresponding influential information. Equally, a corresponding influential information is a current position of a steering angle and/or a change of the steering angle of a steering unit of the vehicle.

These influential criteria or influential information, respectively, may, as this has already been set out in the above, be characterized by one characterization value, that is a numeric value, each. This may then, as equally explained above, be weighted by a weighting factor that is separate thereto, this means in particular a numeric value.

In an embodiment, in the case of an assessment value larger than 1 a driver's intention for a specific driving maneuver of the vehicle is recognized. Such an assessment value larger than 1 therefore characterizes an assessment result, in which with sufficient certainty and thus corresponding probability the underlying driver intention is given.

In the case of an assessment value smaller than or equal to 1 it is recognized that such a driver intention is not given. It is also possible that in the case of an assessment value close to 1 an accurate classification, if a corresponding driver intention is given or not, is not yet facilitated. In an embodiment, it may then be envisaged that additionally a double-checking process for checking this assessment result is performed. A double-checking process may for example be another repeating of the explained procedure or the method, respectively. It is also possible that additionally or instead another communication, in particular optical and/or acoustic, between the assistance system and the vehicle driver is started. Depending on this communication result it may be additionally assessed if the driver's intention is recognized and thus the wish of the vehicle driver for the driving maneuver is actually given or not.

A further aspect of the invention relates to a method for assisting an at least semi-manual driving maneuver of a vehicle. The method preferably comprises the following steps:
- assessing a driver intention by a method according to the above-named aspect or an advantageous embodiment thereof;
- automatic activating of a vehicle unit for signaling the driving maneuver, in particular to the environment and thus other traffic participants, in case the driver intention is recognized as one, in case of which the vehicle driver would like to perform the specific driving maneuver.

In particular, a lane change of the vehicle is recognized as the driving maneuver, in particular, if simultaneously a lane keeping assistance system of the vehicle is activated and/or a lane centering assistance system of the vehicle is activated. Thus, then preferably an automatic activating of a direction indicator of the vehicle is effected, when the driver intention has been recognized.

Thus it is also possible that in the case of a lane keeping assistance system and/or in the case of an activated lane centering assistance system a lane change of the vehicle, in particular also without warning by the named assistance systems, is facilitated and therein automatically a required vehicle unit, namely the direction indicator unit, is activated. Thus, in the case of such a desired driving maneuver, namely a change of lane, automatically an essential action, namely the activating of the direction indicator, is effected on the side of the system. In particular, in this connection it is then also facilitated that warnings, which such an assistance system would otherwise generate, as it possibly would leave a lane and/or recognizes a moving away from the center of the lane, are not generated. Thus, the very linkage between the interaction of the manual guiding of the vehicle and the guiding of the vehicle assisted by at least one assistance system is improved. In particular thus, on the one hand safety-critical driving maneuvers may be avoided in an improved way and on the other hand in such constellations the generating of warnings of the assistance system be eliminated. Alternatively, the assistance system may be deactivated also in the phase, for example of the lane change.

Also if the vehicle driver in the case of such a wish or a driver intention, does not perform an actually essential action, namely the manual actuation of the direction indicator, this does then not lead to undesired warnings of the assistance system, but rather in the case of the recognized driver intention an automatic takeover of this essential action, namely indicating, is effected on the side of the system. Nevertheless the assistance system, in particular the lane keeping assistance system and/or lane centering assistance system, may continue to be active. In particular when the lane change has been effected, thus the operating of the assistance systems without interruption may be continued and on the new lane the usual automated assistance of the vehicle guidance be effected. Alternatively, the assistance system, in particular the lane keeping assistance system and/or lane centering assistance system, may be deactivated also in the phase, for instance of the lane change.

A further aspect of the invention relates to an electronic assistance system for a vehicle. The assistance system comprises at least one computing unit. The assistance system is configured to perform a method according to the above-named aspect or an advantageous embodiment thereof. In particular, this method is configured to comprise the assistance system. The assistance system may comprise a lane keeping assistance system and/or a lane centralizing assistance system.

A further aspect of the invention relates to a vehicle comprising an assistance system according to the above-named aspect or an advantageous embodiment thereof.

Embodiments of the invention are explained in more detail by reference to schematic drawings.

These show in:
- Fig. 1: a schematic representation of an embodiment of a vehicle according to the invention with an embodiment of an assistance system according to the invention;
- Fig. 2: a schematic flow scenario, in which influential information and the determination of an assessment value are represented.

In the figures the same elements or elements having the same function are equipped with the same reference signs.

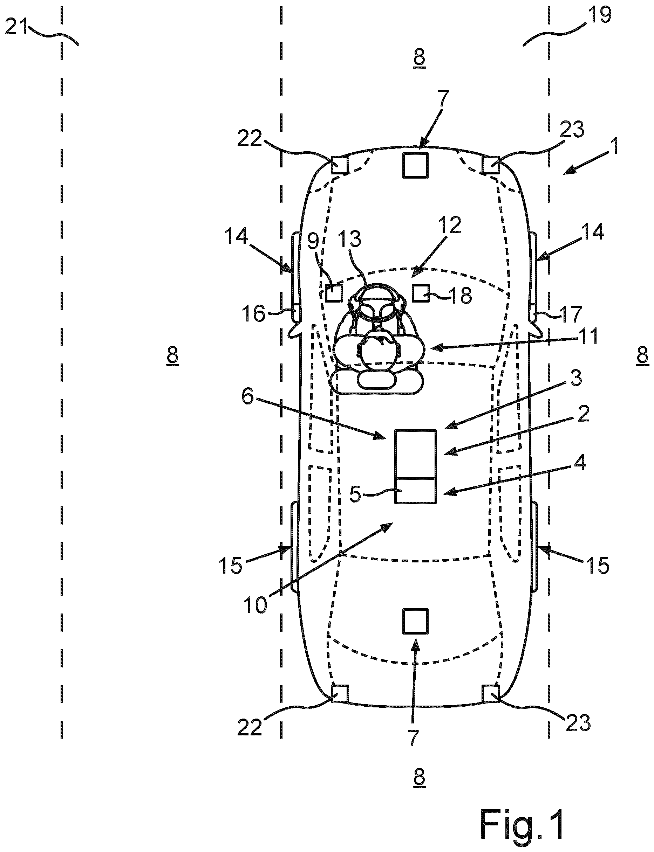

In Fig. 1 in a schematic top view a vehicle 1 is shown. The vehicle 1 may for example be a passenger car or a truck or a bus. However, the vehicle 1 may for example also be a single-track vehicle, for example a motorcycle.

The vehicle 1 comprises an assistance system 2. The electronic assistance system 2 is provided at least for assisting the vehicle guidance of the vehicle 1. The assistance system 2 may for example comprise a lane keeping assistance system 3 and/or a system centering assistance system 4. The assistance system 2 comprises at least one computing unit 5. This may be a computer or comprise a computer, respectively. The computing unit 5 may for example comprise a microprocessor. It may additionally also comprise at least one storage unit.

The computing unit 5 may be a control device 6 of the vehicle 1, in particular of the assistance system 2. In another embodiment, however, the computing unit 5 may also be an integral part of such a control device 6.

The vehicle 1 moreover may comprise an environment capturing system 7. The environment capturing system 7 may comprise a capturing unit or several capturing units. The environment capturing system 7 is configured for capturing an environment or surroundings 8 of the vehicle 1, respectively. It may for example comprise at least one camera and/or a Lidar sensor and/or a radar sensor and/or an ultrasonic sensor. Moreover, the vehicle 1 comprises an interior space capturing system 9. The interior space capturing system 9 is configured for capturing an interior space 10 of the vehicle 1. In particular it is configured for capturing a vehicle driver 11. The interior space capturing system 9 is in particular configured for capturing the viewing direction and/or the position of the head of the vehicle driver 11. The interior space capturing system 9 may comprise a capturing unit or several capturing units. In particular, a capturing unit may be a camera.

The interior space capturing system 9 and/or the environment capturing system 7 may be integral part of the assistance system 2.

Moreover, the vehicle 1 comprises a steering unit 12. The steering unit 12 comprises a steering element 13. The steering element 13 may for example be a steering wheel. It is also possible that the steering element 13 is a joystick or is configured to be similar to a joystick. Also a steering element may be configured to be stud-like or stub-like.

The steering unit 12 may preferably also comprise steerable wheels, in particular steerable front wheels 14 of the vehicle 1. It is also possible that rear wheels 15 of the vehicle 1 are steerable.

The vehicle 1, moreover, may comprise side mirrors 16 and 17 attached to the vehicle longitudinal sides. Also an interior mirror 18 may be provided.

Information of the interior space capturing system 9 and/or the environment capturing system 7 may in particular be provided to the control device 6, in particular the computing unit 5. The computing unit 5 for this purpose may receive the corresponding information. However, it is also possible that with regard to providing the computing unit 5 obtains the corresponding information from a storage unit.

If the vehicle 1 now moves on lane 19 of a road and if the assistance system 2 is activated, the corresponding information of the environment capturing system 7 is evaluated.

In particular in this connection influential information, in particular vehicle information or parameter and vehicle driver information or parameter, may be evaluated.

In order to now be able to assess a possible driver intention, that is a vehicle driver intention, on the side of the system, this influential information is analyzed.

In particular, in this connection an assigning of individual numeric values as characterizing values to the existing vehicle information is effected. Moreover, an assigning of individual numeric values as characterizing values to the existing vehicle driver information is effected.

The characterizing values α are assigned for the various vehicle information and the various vehicle driver information. Here the number i may relate to the number of pieces of vehicle driver information and the number of pieces of vehicle information.

It is possible that for specific vehicle information and/or for specific vehicle driver information characterizing values are generally predetermined. In this regard individual classes may be formed, in which specific vehicle driver information, on the one hand, and specific vehicle information, on the other hand, are classified. Therefore, classes for vehicle driver information and classes for vehicle information may be predetermined. For these classes each individual characterizing values may be generally predetermined and in this regard also be assigned. If now a vehicle driver information and/or a vehicle information of a specific class is given, the characterizing value assigned to this respective class is considered. The same in analogy may also be realized for the weighting factors k, which are predetermined for vehicle information, on the one hand, and vehicle driver information, on the other hand. Here, too, a corresponding classification may be provided.

However, it is also possible, and this is an advantageous embodiment, that the characterizing value α and/or the weighting factors k for vehicle information and/or vehicle driver information is individually determined, in particular calculated. Such situation-specific determination of characterizing values and/or weighting factors may be affected depending on various criteria. These were already exemplarily named in the above. For example this may be depending on the current vehicle situation, that is in particular also depending on a parameter describing a travel state of the vehicle. This calculation, however, may for example also be depending on the number of pieces of vehicle information and/or the number of pieces of vehicle driver information. Equally, this may be depending on the kind of vehicle information and/or the kind of vehicle driver information. A kind of information may for example relate to current information or information to be expected in the future. Information to be expected may for example be estimated or calculated on the basis of specific current information. A kind of information may with regard to the vehicle be such information that directly relates to the vehicle or relates to information depending thereon. The same may apply in analogy also with regard to the kinds of vehicle driver information. A kind of vehicle driver information may for example also be a dynamic behavior of a vehicle driver or a static behavior of a vehicle driver.

Also a temporal and/or local order in which the vehicle driver information and/or vehicle information is captured, may be considered for the dynamic determination or calculation, respectively, of characterizing values. Also a priority list of vehicle driver information and/or vehicle information may be considered for situation-specific determination of a characterizing value. The same in analogy is also possible for the weighting factors. Also a current traffic situation and/or a traffic situation to be expected may be considered for the determination of a characterizing value and/or a weighting factor. It is also possible that the determination of the characterizing values and/or the weighting factors is determined depending on other, already determined characterizing values of vehicle information and/or vehicle driver information and/or depending on already determined weighting factors of vehicle information and/or vehicle driver information. Thus, in such dynamic and current determination of a characterizing value and/or a weighting factor possibly also already present and/or determined other characterizing values and weighting factors are incorporated.

Preferably, an assessment of the driver intention by the computing unit 5 depending on the characterizing values α and the weighting factors k is performed. In particular, therein an assessment value β is generated depending on the characterizing values α and the weighting factors k by the computing unit 5.

Preferably, therein a product value for a vehicle information from the characterizing value α and the weighting factor k is generated. In particular, also a product value for a vehicle driver information is generated from the associated characterizing value α and the associated weighting factor k by the computing unit 5.

It is advantageous if an assessment value β according to the following formula is determined:

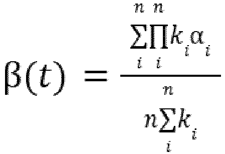

As may be recognized in this formula, the assessment value β is preferably determined over a temporal course t. This means here the average over the time is considered in the assessment value β. The index i in this connection refers to the number or figure of the individual pieces of vehicle information and vehicle driver information.

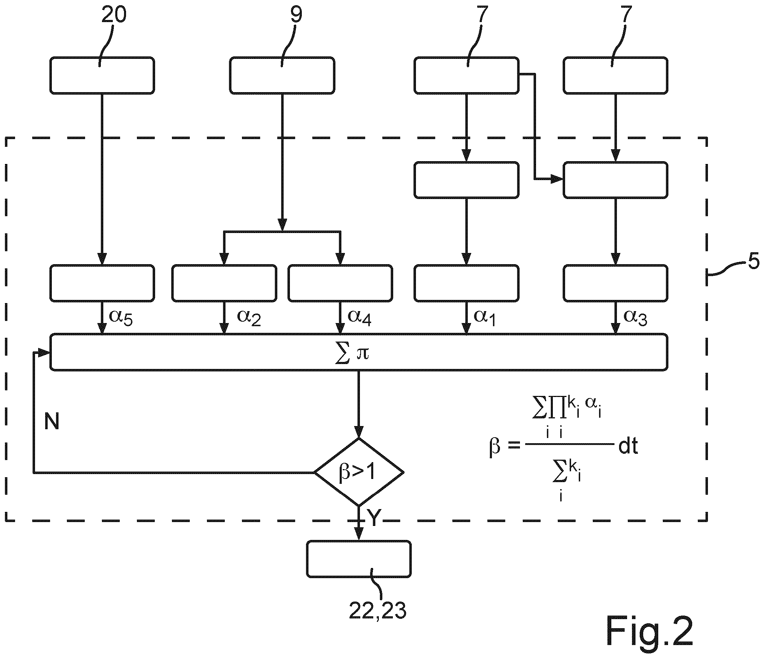

Exemplarily in Fig. 2 a diagram is shown, in which here several pieces of vehicle information and several pieces of vehicle driver information are considered. In this way, according to the represented Fig. 2, on the basis of sensor information, which for example are transmitted via a bus system 20 to the computing unit 5, a steering angle of the steering element 13 may be determined. This is then in the present embodiment a vehicle information with the characterizing value α5. It is also possible that via the interior space capturing system 9, as already mentioned, the viewing direction of the vehicle driver 11 and/or the position of the head of the vehicle driver 11 is captured. In particular, this is the case with regard to the observation of a region of interest, which is in focus, if a specific driving maneuver, for instance a lane change, is performed. In particular, thus, the viewing direction and/or the position of the head with regard to the observation of a side mirror 16, if a lane change to a further lane 21 adjacent to the lane 19 on the left side is to be performed, may be assessed. This may also be affected by the computing unit 5 according to a step of the evaluation. In particular, thus, as vehicle information by the characterizing value α2 the viewing direction here in the exterior mirror 16 may be assessed or whether this has been effected. Moreover, also a dead angle observation as vehicle driver information may be affected by the characterizing value α4 on the basis of this information, in particular on the basis of the position of the head. Thus, also a monitoring of the dead angle is facilitated or it is possible to assess if the dead angle is considered, respectively.

Moreover, as vehicle information, in particular on the basis of the information of the environment capturing system 7, a capturing of primary target objects may be affected. Here, too, this may then be transmitted to the computing unit 5 and for example a duration of time until the potential collision with such a primary target object be determined. This may then be used as vehicle information. A characterizing value α1 assigned in this regard is shown in Fig. 2. It thus describes a value for object-observing environment, in particular an obstacle observation. In particular, in this connection also the speed of such an object, in particular which is traveling in front of the vehicle 1 on the lane 19, may be observed. In particular, it may thus also be captured if the object on the same lane 19 in front of the vehicle 1 moves, in particular also along which trajectory it moves and at which speed it moves.

A further vehicle information may be the observation of the environment 8 as to whether other objects, in particular also obstacles, are present on the adjacent lane 21, this as to whether in principle then a lane change, in particular an overtaking, of another vehicle, which is traveling on the lane 19 in front of the vehicle 1, is possible. Also this information may in particular be transmitted to the computing unit 5 and depending thereon be assigned as characterizing value for this vehicle information of the characterizing value α3.

As is discerned from the representation in Fig. 2, all these characterizing values α1 to α5, to be understood as merely exemplary in number and kind, are considered in order to determine the assessment value β. In particular, here it is envisaged that each of these characterizing values α1 to α5 is multiplied by an individual correction factor or weighting factor k1 to k5.

In particular, it is envisaged that, if the assessment value β > 1, a driver intention of the vehicle driver 1 is recognized with sufficient accuracy. In particular, then here in the embodiment a driver intention is recognized that the vehicle driver 11 wishes or intends to perform a lane change from lane 19 to the adjacent lane 21.

It is then possible that, if this driver intention is recognized, the assistance system 2, in particular the lane keeping assistant and the lane centering assistant, are activated and remain further activated, automatically a function unit of the vehicle 1 is activated, which signals the environment of this lane change. In particular, here a direction indicator 22 is activated, which signals the lane change to the left from lane 19 to the lane 21. Moreover, it is then also envisaged that the assistance system 2 in this scenario does not generate any warning, which is transmitted to the driver 11, that the lane 19 is possibly left without permission and/or a central driving on the lane 19 is no longer effected. This is because on the basis of this driver intention recognized on the system side for example in the case of an activated assistance system 2 and a direction indicator 22 not being activated, this is taken over by the system, in particular by the assistance system 2. However, it then still remains activated in an embodiment during the further procedure.

Therefore, it is in particular envisaged that this method is performed, if for example a corresponding change of lane is wished to be performed by the vehicle driver and this may be indirectly assessed and recognized by corresponding actions.

In another embodiment it is also possible that, when this driver intention is recognized and by the assistant system 2 the direction indicator 22 is automatically activated, for the duration of the lane change the lane keeping assistant and the lane centralizing assistant are temporarily deactivated. These systems may then automatically be reactivated if the lane change is fully completed and the vehicle 1 then continues to drive on the lane 21 explained in the example.

## Claims

1. Method, in particular computer-implemented method, for assessing a driver intention of a driver (11) of a vehicle (1), comprising the following steps:
a) providing vehicle parameter to a computing unit (5);
b) providing parameter as to the vehicle driver (11) to the computing unit (5);
c) assigning at least one first characterizing value (α) to at least one vehicle parameter;
d) assigning at least one second characterizing value (α) to at least one vehicle driver parameter;
e) assigning at least one first weighting factor (k) for at least one vehicle parameter, by which the first characterizing value (α) of the vehicle parameter is weighted;
f) assigning at least one second weighting factor (k) for at least one vehicle driver parameter, by which the second characterizing value (α) of the vehicle driver parameter is weighted;
g) assessing the driver intention by the computing unit (5) depending on the first and second characterizing values (α) and the first and second weighting factors (k).

2. Method according to claim 1, wherein, when assessing, an assessment value (β) depending on the first and second characterizing values (α) and the first and second weighting factors (k) is generated by the computing unit (5).

3. Method according to claim 1 or 2, wherein a product value for a vehicle parameter is generated by the computing unit (5) from the first characterizing value (α) and the first weighting factor (k).

4. Method according to any one of the preceding claims, wherein a product value for a vehicle driver parameter is generated by the computing unit (5) from the second characterizing value (α) and the second weighting factor (k).

5. Method according to claim 2 and according to claim 3 and 4, wherein the product values are summed and by the sum form the assessment value (β).

6. Method according to any one of the preceding claims, wherein the first characterizing values (α) of the vehicle parameter are determined and then assigned depending on the number of pieces of vehicle parameter and/or the kind of vehicle parameter and/or the order, in which the vehicle parameter is captured, and/or a priority list of the vehicle parameter.

7. Method according to any one of the preceding claims, wherein the second characterizing values (α) of the vehicle driver parameter are determined and then assigned depending on the number of pieces of vehicle driver parameter and/or the kind of vehicle driver parameter and/or the order, in which the vehicle driver parameter is captured, and/or a priority list of the vehicle driver parameter.

8. Method according to any one of the preceding claims, wherein the first weighting factors (k) of the vehicle parameter are determined and are assigned then depending on the importance of the vehicle parameter.

9. Method according to any one of the preceding claims, wherein the second weighting factors (k) of the vehicle driver parameter are determined and then assigned depending on the importance of the vehicle driver parameter.

10. Method according to any one of the preceding claims, wherein at least two of the following are considered as the vehicle parameter:
- current steering angle of a steering unit of the vehicle (1) and/or change of the steering angle of the steering unit of the vehicle (1);
- vehicle speed;
- duration of time until a potential collision with an object in the environment (8) of the vehicle (1);
- vehicle environment parameter, in particular parameter as to the at least one object in the environment (8) of the vehicle (1).

11. Method according to any one of the preceding claims, wherein at least two of the following are considered as the vehicle driver parameter:
- viewing direction of the vehicle driver (11);
- position of the head of the vehicle driver (11);
- grasping a steering element (13) of a steering unit (12) of the vehicle (1) by the vehicle driver (11).

12. Method according to any one of the preceding claims, wherein the steps a) to g) are repeated at least once and the driver intention is assessed depending on the temporal course of the assessment result, in particular a temporal course of an assessment value (β).

13. Method according to any one of the preceding claims, wherein in the case of an assessment value (β) larger than 1, a driver intention for a specific driving maneuver of the vehicle (1) is recognized, and/or in the case of an assessment value (β) higher than or equal to 1, a recognizing of a driver intention for a specific driving maneuver of the vehicle (1) is recognized as uncertain and a double-checking process by the computing unit (5) is started.

14. Method for assisting an at least semi-manual driving maneuver of a vehicle (1), comprising the following steps:
- assessing a driver intention by a method according to any one of the preceding claims 1 to 13;
- automatic activating of a direction indicator (22, 23) for signaling the driving maneuver, in case the driver intention is recognized as one in which the vehicle driver would like to perform the specific driving maneuver.

15. Method according to claim 14, wherein as the driving maneuver, a lane change of the vehicle (1) is recognized, in particular when a lane keeping assistance system (3) of the vehicle (1) is activated and/or a lane centralizing assistance system (4) is activated, and as automatic activating the direction indicator (22, 23) of the vehicle (1) is activated.

16. Assistance system (2) for a vehicle (1), which comprises a computing unit (5), wherein the assistance system is configured to perform a method according to any one of the preceding claims.
